Europäisches Patentamt

European Patent Office                    (11) Publication number: **0 049 176**

Office européen des brevets                                    **A1**

(19)

(12) **EUROPEAN PATENT APPLICATION**

(21) Application number: **81401171.4**          (51) Int. Cl.³: **G 06 F 3/023**

(22) Date of filing: **22.07.81**

(30) Priority: **26.09.80 US 191210**

(43) Date of publication of application: **07.04.82**
Bulletin 82/14

(84) Designated Contracting States: **DE FR GB IT SE**

(71) Applicant: **THE BENDIX CORPORATION, Executive Offices Bendix Center, Southfield, Michigan 48037 (US)**

(72) Inventor: **Young, Will Wei Wen, 224 Garden Street, Hoboken New-Jersey 07030 (US)**
Inventor: **Forrester, Frederick H., 85 Graham Avenue, Paterson New-Jersey 07524 (US)**

(74) Representative: **Maguet, André et al, Service Brevets Bendix 44, Rue François 1er, F-75008 Paris (FR)**

(54) **Program composing method.**

(57) Program composing method carried out by a program composing terminal system which accepts test data inputs in a user oriented format and in turn generates a machine independent and syntax correct higher order language source for providing an easy to use automatic test equipment oriented program, and generates completed test documents requirements forms, this method comprising: writing program specifications in a user oriented format and inputting the specifications to program specification forms; entering the forms into a program terminal for processing these forms and generating a preliminary program; reviewing the preliminary program; and utilizing the reviewed program for generating a syntactically correct higher order language program and generating completed test documents requirements forms.

Program composing method

This invention relates generally to a method for composing a program which allows a user with limited programming experience to generate syntactically correct higher order language test programs and, particularly, to a method for composing a program which allows the user to obtain syntactically correct specifications, procedures, programs and formal test requirements documentation by supplying test data input in a form natural to his environment.

The traditional approach to the preparation of higher order language test specifications, test procedures and test programs requires several phases including a manual coding phase, a keypunch/terminal input phase and a syntax check and compilation phase. Experience shows that statement syntax, program structure and automatic test equipment (ATE) usage errors are incurred by even the most experienced test programmers prior to the syntax check and compilation phase. For example, six to ten corrective iterations are typically required to produce a syntactically correct higher order language source. Likewise, the preparation of test requirements documents are also tedious, time-consuming and subject to many iterations of review and corrections.

Traditional higher order language programming involves: relatively high initial costs for training test oriented personnel in the higher order language formats and programming rules; keypunch/terminal support costs; the need for rapid and easy access to reference material or prior sections of a test specification, test procedure or test program; and iterative processing time and costs for producing syntactically correct source code. These costs repeat for subsequent updates during program validation and later program modifications, and hence add to already high programming costs.

The present invention overcomes the disadvantages of traditional higher order language programming by providing a higher language program composing method which can be used by personnel with limited programming experience to generate syntactically correct higher order language test programs.

According to the invention there is provided a program composing method comprising the steps of: writing the program specification on forms in a user oriented format; entering said forms into a program composing terminal for processing said forms and for generating an initial version of a program sequence; storing said initial version of the program sequence; reviewing said program specification and the stored initial version of the program sequence; utilizing the results of the review for generating a particularly oriented syntactically correct higher order language program; editing said higher order language program; and optionally storing the edited higher order language program and transmitting said program for utilization.

The manner of carrying out the invention is described in detail below with reference to the accompanying drawings in which:

FIGURE 1 is a flow diagram showing the use of the invention during a macro program development cycle;

FIGURE 2 is a flow diagram showing the use of the invention during a unit under test (UUT) program development cycle;

FIGURE 3 is a block diagram showing the key elements of software of the invention;

FIGURE 4 is a diagrammatic representation showing a structural arrangement of the major hardware components used for carrying out the invention; and

FIGURE 5 is a flow diagram illustrating the use of the program composing terminal system for carrying out the invention.

There is described herein a program composing terminal system for carrying out the invention which accepts test data inputs in a user oriented format and, in turn, generates a machine independent and syntax correct higher order language source for providing an easy to use, automatic test equipment (ATE) oriented program creation facility. In addition, the same data inputs are used to produce a test requirements document.

The fundamental objectives of the program composing method according to the invention are: to shorten the unit-under-test (UUT) test specification development to an ATE program development cycle; to eliminate restriction to specific ATE or test language; to speed training of novice test programming personnel; to maximize programmer productivity; to produce syntax correct test code; and to enable traceability and configuration control between test programs and test requirements documents.

This program composing method has two major capabilities that shorten the UUT Test Specification Development to ATE program development cycle. The first capability is a language independent capability that allows design/test personnel to generate lists of stimuli, loads, measurements, limits and diagnostic paths without being encumbered by language structure rules and syntax restrictions. The second capability is an interactive ATE oriented program development cycle which features tools that minimize the data (keystrokes) that must be inputed by a test programmer.

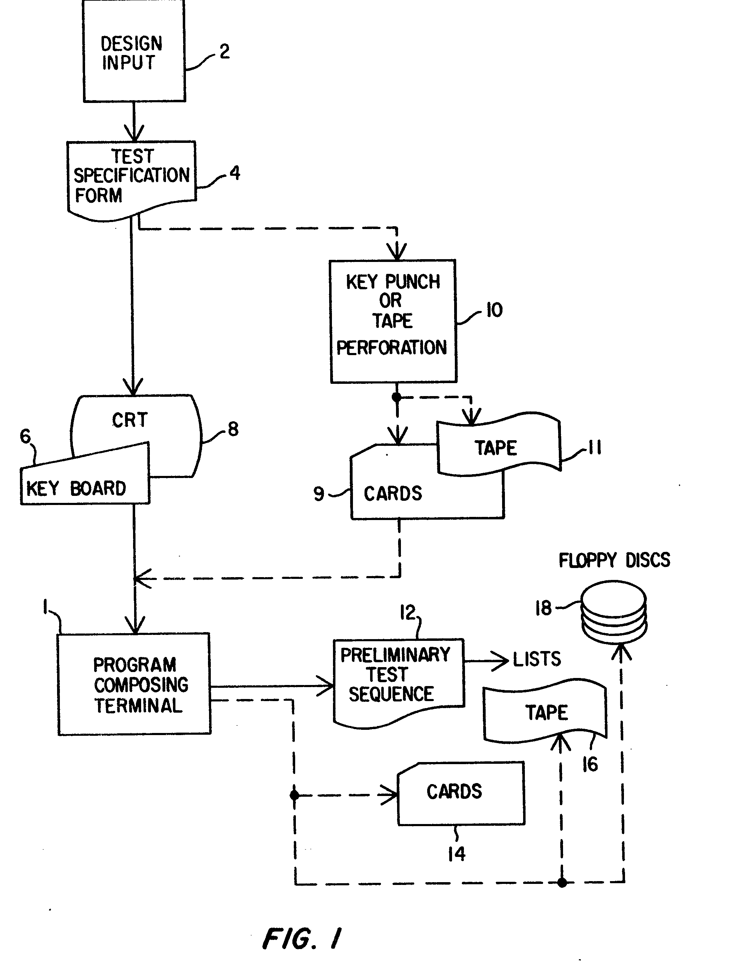

FIGURE 1 is a flow chart which shows the use of a program composing terminal 1 during a macro program development cycle. This cycle starts at 2 with design/test personnel writing, for example, a test specification as an input on simple test specification forms, as at 4. These forms can then be entered on-line into program composing terminal 1 via a keyboard 6 and display screen (CRT) 8, or, alternatively can be put on punched cards 9 or perforated tape 11 via keypunch or tape perforation means 10 off-line and entered in batch mode into the program composing terminal as shown by the dashed lines in the Figure. Program composing terminal 1 processes this data and generates a preliminary version of a test sequence at 12. The preliminary test sequence can be in the form of lists or, alternatively, can be placed on cards 14, perforated tape 16, or floppy discs 18, as shown by the dashed lines in the Figure, for recall during the program development cycle.

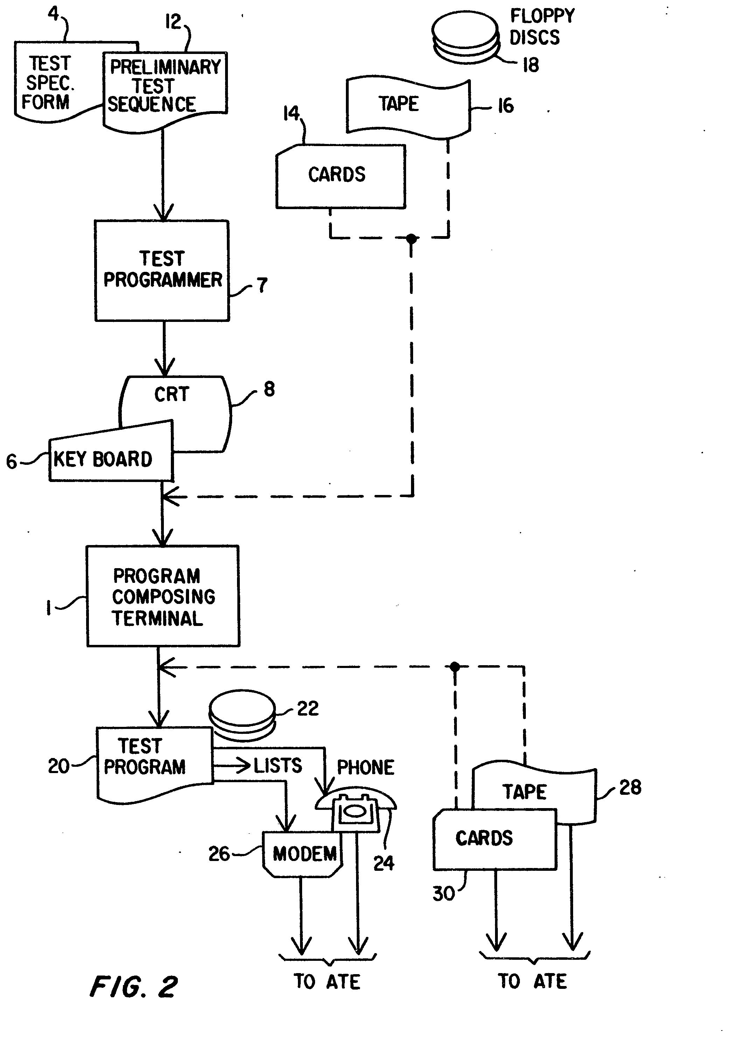

FIGURE 2 is a flow chart which shows the use of program composing terminal 1 during a test program development cycle. During this cycle, the test programmer at 7 utilizes test specification form 4 provided as heretofore described with reference to FIGURE 1 to input test data which are stored by the program composing terminal system.

Using the stored input test data, terminal 1 is used to automatically generate the ATE oriented test program at 20. This program can be listed or stored in floppy discs 22. Additionally, the terminal can optionally send the program to the ATE via a phone link 24 or hard wired modem 26. Alternatively, the test program can be carried to the ATE via perforated tape 28 or cards 30.

There are three kinds of users for the program composing terminal systems for carrying out the invention. First, there are design/test engineers who specify stimuli, measurements, connections, limits and diagnostic tabs for the units under test (UUT's). The second kind of user is a test programmer/test engineer who relates the required testing to the automatic test equipment (ATE) and its unique language and hardware resources. Finally, the third kind of user is the system/programmer/compiler-writer who creates the data base that makes the terminal serve the other users.

Each user has a unique task to perform and the program composing terminal system for carrying out the invention provides an interface designed to meet the specialized user needs. The interface for the design/test engineer is test specification form 4 referred to in connection with FIGURES 1 and 2. A major feature of this interface is that the preliminary test sequence lists will be expanded automatically into the repetitious program sequences required by the ATE languages. The expansion occurs when the test programmers/test engineers create the final program.

The interface for the test programmers/test engineers physically includes a keyboard and a pair of cathode ray tube (CRT) screens. This interface includes the following software tools in the code creation mode:

1. Systems Menus - these are self-explanatory lists of software tools available on the terminal.

2. Help File - this is a data base that consists of clarification, notes, and hints for all users.

3. Language Menus - these are lists of the verbs available in the currently loaded language sets.

4. Fill in Prompts - these are systems responses that guide the programmer in the creation of language statements. The prompts are used with displayed input forms or language syntax diagrams.

5. Error Messages - these are flags that alert the user to an invalid action and allow for on-the-spot correction.

6. Editing operations - these help to make changes to the current or existing programs. In this connection, existing programs may be retrieved and edited.

7. Scrollable source - this allows the programmer to look back at the earlier portions of his code.

The system/programmer/compiler-writer will interface physically through the keyboard and the two CRT screens. Software tools and features available in a data base creation mode include:

1. Syntax Diagram Drawing Tools - these are identification and reference box drawings, line drawings and other tools that combine an unambiguous definition of language sets.

2. Menu Creation - this tool is used also in the construction of language specific menus.

3. Help file creation - this Tool maintains the help files. Standard editing features are provided.

There are two means of communication with the ATE:

1. On-Line - In this mode the programmer can send, via telephone or modem, ATE oriented language or a full higher order language to the test station for compilation and error analysis (looking for omissions rather than syntax errors and then generating the executable code). The ATE can return the results of this analysis or provide printed outputs. There is also the ability to request retrieval of a program from the ATE's memory storage unit (MSU); request a compilation or request a listing.

2. Off-line - In this mode, floppy discs, perforated tape or any other viable output media are taken to the ATE for analysis.

The primary objective of the program composing terminal system for carrying out the invention are the following:

1. It shall be a RESPONSIVE SYSTEM that encourages increased programmer productivity. The system characteristics that will make this feature possible are:

   a. Maximum delay of 2 seconds between keystroke and screen update (except where incremental processing is not possible and mass storage accesses are unavoidable).

   b. Incremental processing will be used (e.g. maintain and update alternative screens in memory anticipating most probable operator actions).

   c. Ideally, the system should not operate at a speed that slows a typical programmer's thought process (i.e., it should react so that he can run the system and not get ahead of the system).

2. It shall provide a CODE CREATION MODE that functions at a rate greater than a programmer working at a standard terminal, using an interactive compiler. The system will be constructed so that an experienced programmer should be able to produce code with forty percent of the number of keystrokes required for a standard terminal, using an interactive compiler.

3. It shall include a TEACHING CAPABILITY that speeds training of new programmers while assuring almost immediate productivity. This feature shall be incorporated so that:

   a. The use of a manual to learn how to operate the terminal should be virtually eliminated by the utilization of self-explanatory menus and reference text.

b. The inexperienced programmer can opt to be guided through the syntax of each statement.

c. Statement numbering should be automatic or manual with automatic incrementing.

d. Report titles should be user definable.

4. It shall provide a macro preprocessor that speeds the test specification development to ATE program development cycle. This should permit the following:

a. Test specification writing by using a form fillout technique that is, to the maximum extent possible, free of higher order language constraints and extraneous words.

b. Conversion of test specifications to valid source code (to the maximum extent possible) with the elimination of needless human entry of repetitive sequences (e.g., often tests are apply-measure-verify sequences done many times over with different stimulus-output-connection values). The best option would be to add an array processor to the higher order language. The terminal will compensate for this deficiency of test languages by generating the apply-measure-verify sequences from tables of stimulus-output-connection values.

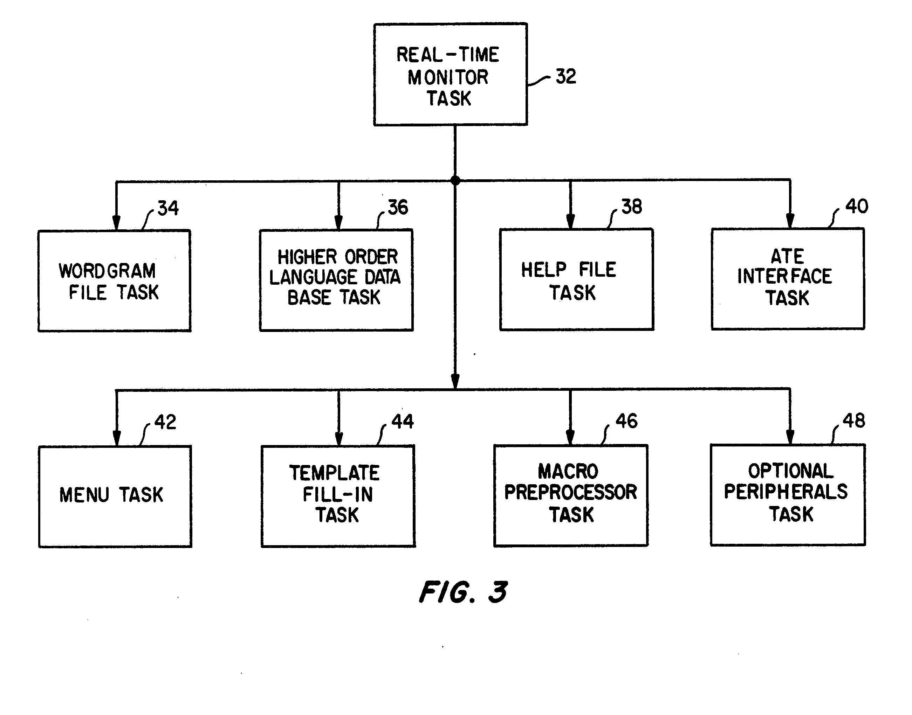

The chart of FIGURE 3 shows the key elements of software of the invention and the kind of activity assigned to each task.

Thus, the real-time monitor task at 32 has the assigned activity of queuing, scheduling, input/output handling and utility support of applications tasks.

The languagegram or wordgram file task at 34 has the assigned activity of creating, deleting, modifying, retrieving and displaying functions for higher order language languagegrams. While the higher order language data base task at 36 has the assigned activity of creating, deleting, modifying, retrieving and displaying functions for the higher order language core and subsets.

The help file task at 38 provides all necessary handshaking for interfacing to the ATE at 40. It schedules the necessary tasks for incoming messages.

The menu task at 42 is basically a tree structure that leads to the scheduling of an application task. It allows for rapid access by the experienced user while allowing the new user to find his way.

The template fill-in that at 44 has the assigned activity of an editing and limiting check for input data to fill in higher order language statements. Selection of these statements is also accomplished by this task.

The macro preprocessor Task at 46 has the assigned activity of managing the data to be inputed from test specification forms 4, shown in FIGURES 1 and 2.

The optional peripherals Task at 48 has the assigned activity of managing data for all optional peripherals such as: card readers, tape punchers and tape readers.

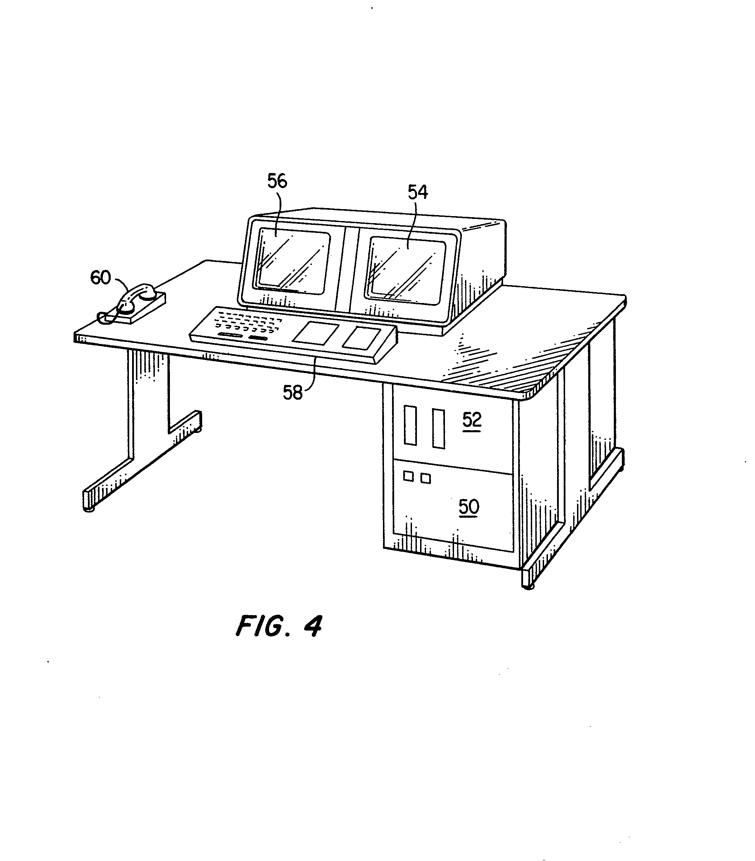

FIGURE 4 shows the structural configuration of the major hardware components of the program composing terminal system for carrying out the invention:

This structure includes a programmer unit 50 including a micro-computer featuring a central processing unit (CPU) and associated memory. The operating system has real time, executive control and memory resident applications. The programmer unit should be of sufficient size and have sufficient speed to manage all system activities without swapping or overlaying. Preferably, it has an auto-load feature and power fail protection.

A local memory unit 52 features dual floppy discs storing current language definitions and source program. The local memory unit must have adequate space for a memory resident module, the currently applicable higher order language subset and HELP data bases.

A pair of cathode ray tube(CRT) screens 54 and 56 are provided. Both screens are of the touch sensitive type. Screen 54 is a working screen which will speed the use of self-teaching menus by a programmer. The fill-in template (or form) will appear on this screen. Screen 56 is a reference screen which provides the capability of reviewing earlier portions of the program under development, examining reference material such as languagegrams and viewing aids, hints and advices from the HELP function of the system.

Touch sensitive screens 54 and 56 may be of the commercially available type, having twenty-four lines on the display disposed in relation to touch sensitive pads as is well known in the art. The use of touch sensitive screens for both the working and reference displays minimizes the number of special keys required on a custom keyboard 58 and limits the needed eye movements of the user.

Custom keyboard 58 provides the ability to manage the cursor on both CRT screens 54 and 56, scroll the reference screen with single keystrokes and use standard units such as seconds, volts, counts, etc., with single keystrokes.

Custom keyboard 58 may be a standard typewriter type keyboard which should have special key caps that allow single stroke entry of standard terms. Two cursor control pads should be available on the keyboard to manage the cursor for each of the screens 54 and 56. A separate number pad for ease in entering numeric strings should be provided, as well as a system control function for giving the operator access to system function (such as the main directory) without losing current activities.

A phone link 60 to the main computer (not shown) allows down loading of higher order language subsets associated languagegrams and HELP function data bases, transmission of syntax correct higher order language to the main computer and receipt of message and data regarding compilations from the main computer.

Optional hardware, not shown, but usable with the invention as will be understood by those skilled in the art, includes a printer for printing data from cards or tapes; a card reader that can be used to input cards from an off-line keypunch operation for test specificaction; a tape punch that can be used to input source data to ATE's not attached to the program composing terminal; a tape reader that can be used to input tape from an off-line tape punch operation for test specification; and a magnetic cassette or cartridge having a function similar to the tape

0049176

punch and tape recorder.

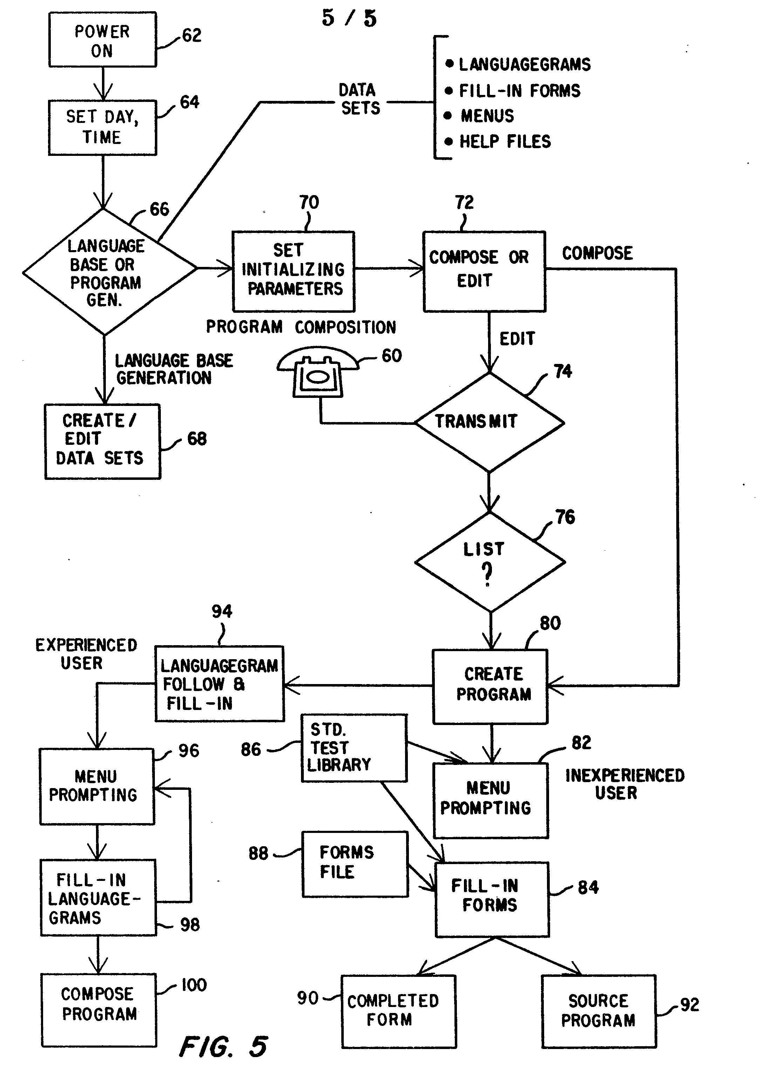

With reference to FIGURE 5, which illustrates the use of the program composing terminal system for carrying out the invention, a sequence is started with the system in a "power on" condition via 62 and parametric data set into the system at 64.

Language base or program generation is accomplished via 66 in response to languagegrams, fill-in-forms, menus and help files, collectively referred to as data sets. Creation/ editing of the data sets is accomplished at 68.

Program composition is accomplished by setting initializing parameters at 70 and composing or editing at 72, including retrieving and editing existing programs. Edited programs are transmitted via 74 to phone link 60 for communication with the main computer as aforenoted and lists may be provided at 76 leading to program creation at 80.

With the program created at 80, an inexperienced user sequence includes menu prompting at 82 and fill-in forms at 84 in response to standard test library 86 and forms file 88 inputs leading to a completed form at 90 or a source program at 92.

An experienced user sequence includes languagegram follow and fill-in at 94, menu prompting at 96, fill-in languagegrams at 98 and program composing at 100.

-11- 0049176

Claims:

1. A program composing method, characterized by the steps of: writing program specifications in a user oriented format and inputting said specifications to program specification forms; entering said forms into a program composing terminal for processing said forms and for generating a preliminary program; reviewing said preliminary program; and utilizing said reviewed program for generating a syntactically correct higher order language program and generating completed test documents requirements forms.

2. A program composing method as claimed in claim 1, characterized in that the step of entering the program specification forms into a program composing terminal consists in entering said forms on-line to said program composing terminal via a keyboard and display screen.

3. A program composing method as claimed in claim 1, characterized in that the step of entering the program specification forms into a program composing terminal consists in keypunching said forms onto cards off-line to said program composing terminal and entering the keypunched cards in batch mode into said program composing terminal.

4. A program composing method as claimed in claim 1, characterized in that the step of entering the program specification forms into a program composing terminal consists in perforating said forms onto tapes off-line to said program composing terminal and entering the perforated tapes in batch mode into said program composing terminal.

5. A program composing method as claimed in claim 1, characterized by the step of storing said preliminary program for later review.

6. A program composing method as claimed in claim 5, characterized in that instead of storing the preliminary program said program is listed.

7. A program composing method as claimed in claim 1, characterized by the step of storing said syntactically correct higher order language program.

8. A program composing method as claimed in claim 7, characterized in that instead of storing the syntactically correct higher order language program said program is listed.

9. A program composing method as claimed in claim 1, characterized by the step of transmitting the syntactically correct higher order language program to a utilizing device.

10. A program composing method as claimed in claim 9, characterized in that the step of transmitting the syntactically correct higher order language program to a utilization device includes optionally transmitting said program via a phone link or a hard wired modem.

11. A program composing method as claimed in claim 1, characterized by the steps of storing and listing the completed test requirements documentation.

12. A program composing method, characterized by the steps of: writing the program specification on forms in a user oriented format; entering said forms into a program composing terminal for processing said forms and for generating an initial version of the program sequence; storing said initial version of the program sequence; reviewing said program specification and the stored initial version of the program sequence; utilizing the results of the review for generating a particularly oriented syntactically correct higher order language program; editing said higher order language program; and optionally storing the edited higher order language program and transmitting said program for utilization.

13. A program composing method as claimed in claim 12, characterized in that the step of editing the higher order language program includes retrieving and editing existing programs.

FIG. 1

FIG. 2

*FIG. 3*

0049176

FIG. 4

FIG. 5

European Patent
Office

**EUROPEAN SEARCH REPORT**

0049176

Application number

EP 81 40 1171

| DOCUMENTS CONSIDERED TO BE RELEVANT | | | CLASSIFICATION OF THE APPLICATION (Int. Cl.³) |
|---|---|---|---|
| Category | Citation of document with indication, where appropriate, of relevant passages | Relevant to claim | |
| | COMPUTER, vol. 7, no. 4, April 1974, pages 33-38 Long Beach, U.S.A. P. FREEMAN: "Automating software design"<br><br>* Page 34, column 2, line 1 - page 35, column 2, line 2 *<br><br>-- | 1,11-13 | G 06 F 3/023 |
| | COMPUTER GRAPHICS 80, 13th-15th August 1980, published by Online Publications Ltd., pages 535-547 Northwood Hills, Middx., G.B. J.L. DIAZ-HERRERA et al.: "Hierarchical structured diagrams"<br><br>* Page 537, lines 7-19; page 541, line 32 - page 542, line 14; page 544, line 16 - page 545 *<br><br>-- | 1,5,6, 8,12 | TECHNICAL FIELDS SEARCHED (Int. Cl.³)<br><br>G 06 F 3/023 |
| | IBM TECHNICAL DISCLOSURE BULLETIN, vol. 18, no. 2, July 1975, pages 479-480 New York, U.S.A. M.C. SCHWARTZ et al.: "System for flow charting and programming"<br><br>* Whole document *<br><br>-- | 1,2,5, 7,12 | |
| | ANGEWANDTE INFORMATIK, vol. 17, no. 11, November 1975, pages 487-491 Braunschweig, DE. M.W. HEATH et al.: "Standardised table driven software for data preparation systems"<br><br>* Page 488, column 1, line 1 - column 2, line 14; page 489, column 1, line 46 - column 2, line 24 *<br>-- ./. | 1-4, 10,12 | CATEGORY OF CITED DOCUMENTS<br><br>X: particularly relevant<br>A: technological background<br>O: non-written disclosure<br>P: intermediate document<br>T: theory or principle underlying the invention<br>E: conflicting application<br>D: document cited in the application<br>L: citation for other reasons<br><br>&: member of the same patent family, corresponding document |

| | | |
|---|---|---|
| ✗ | The present search report has been drawn up for all claims | |
| Place of search<br>The Hague | Date of completion of the search<br>09-12-1981 | Examiner<br>LACROIX |

| Category | Citation of document with indication, where appropriate, of relevant passages | Relevant to claim |
|---|---|---|
| | ANGEWANDTE INFORMATIK, vol. 21, no. 10, October 1979, pages 441-445 Braunschweig, DE. N. PORTNER et al.: "Computergestütztes Programmieren durch Spezifizieren am Bildschirm" \* Page 441, column 2, line 31 - page 442, column 2, line 29 \* | 1,2, 12 |
| | ANGEWANDTE INFORMATIK, vol. 21, no. 1, January 1979, pages 23-34 Braunschweig, DE. A. SCHULZ: "Software-Entwurfsmethoden: Ein Vergleich des LITOS-Verfahrens mit der Jackson-Methode" \* Page 24, column 1, line 15 - column 2, line 50 \* | 1 |
| A | IBM TECHNICAL DISCLOSURE BULLETIN, vol. 22, no. 6, November 1979, pages 2493-2495 New York, U.S.A. R.J. BAMFORD et al.: "Source code generating method utilizing a programmable graphics display system" \* Whole document \* | 1 |

## DOCUMENTS CONSIDERED TO BE RELEVANT

CLASSIFICATION OF THE APPLICATION (Int. Cl.3)

TECHNICAL FIELDS SEARCHED (Int. Cl.3)

EPO Form 1503.2 06.78